# EUROPÄISCHE PATENTSCHRIFT

(11) **EP 1 901 606 B1**
(45) Veröffentlichungstag und Bekanntmachung des Hinweises auf die Patenterteilung: **19.10.2011**
(21) Anmeldenummer: 06753882.7
(22) Anmeldetag: 26.05.2006
(51) Int. Cl.: A01N 37/16

(54) **DESINFEKTIONS- UND ENTKEIMUNGSMITTEL**
DISINFECTANT
PRODUITS DE DESINFECTION ET DE STERILISATION

(30) Priorität: 25.05.2005 DE 102005024001
(43) Veröffentlichungstag der Anmeldung: 26.03.2008
(73) Patentinhaber: NEV'S New Ecological Vision'S GmbH, 59227 Ahlen (DE)
(72) Erfinder: REICHWAGEN, Sven, 59227 Ahlen (DE)
(74) Vertreter: Schöneborn, Holger
(86) Internationale Anmeldenummer: PCT/EP2006/005016
(87) Internationale Veröffentlichungsnummer: WO 2006/125657

(56) Entgegenhaltungen:
- EP-A- 1 371 643
- WO-A-94/24863
- DE-A1- 4 302 812
- FR-A- 2 761 080
- DATABASE WPI Week 199251 Derwent Publications Ltd., London, GB; AN 1992-418115 XP002453717 & JP 04 311435 A (TOPPAN PRINTING CO LTD) 4. November 1992 (1992-11-04)
- DATABASE CA [Online] CHEMICAL ABSTRACTS SERVICE, COLUMBUS, OHIO, US; BASTOS, MARIA DO SOCORRO ROCHA ET AL: "The effect of the association of sanitizers and surfactant in the microbiota of the Cantaloupe (Cucumis melo L.) melon surface" XP002453713 gefunden im STN Database accession no. 2004:1027227 & FOOD CONTROL , 16(4), 369-373 CODEN: FOOCEV; ISSN: 0956-7135, 2005,
- DATABASE CA [Online] CHEMICAL ABSTRACTS SERVICE, COLUMBUS, OHIO, US; XIE, JUNFENG: "Preparation of soluble solid peroxide powder" XP002453714 gefunden im STN Database accession no. 2001:347446 & CN 1 265 831 A (PEOP. REP. CHINA PEOP. REP. CHINA) 13. September 2000 (2000-09-13)
- DATABASE CA [Online] CHEMICAL ABSTRACTS SERVICE, COLUMBUS, OHIO, US; GAO, JUNHUA: "Water-based domestic insecticide aerosol" XP002453715 gefunden im STN Database accession no. 2005:460100 & CN 1 513 323 A (PEOP. REP. CHINA PEOP. REP. CHINA) 21. Juli 2004 (2004-07-21)

## Beschreibung

Die Erfindung betrifft eine Zusammensetzung enthaltend mindestens eine Percarbonsäure. Des Weiteren betrifft die Erfindung ein Verfahren zur Herstellung einer solchen Zusammensetzung sowie ihre Verwendung.

Die Verwendung von Percarbonsäuren als Bakterizid zu Desinfektionszwecken ist grundsätzlich aus dem Stand der Technik bekannt, beispielsweise aus der europäischen Patentschrift EP 0 677 990 B1. Insbesondere ist hierin die Verwendung von Peressigsäure beschrieben. Das Desinfektionsmittel eignet sich u. a. zur Behandlung von medizinischen Ausrüstungsgegenständen, beispielsweise Endoskopen.

Die Herstellung von Percarbonsäurelösungen erfolgt durch Umsetzung der Carbonsäure mit Wasserstoffperoxid im wässerigen Medium in Anwesenheit eines sauren Katalysators, üblicherweise Schwefelsäure. Bei der Reaktion bildet sich ein Gleichgewicht zwischen der Percarbonsäure als Reaktionsprodukt einerseits und den Edukten, d. h. der Carbonsäure und Wasserstoffperoxid, andererseits aus. Häufig wird nach erfolgter Reaktion das Reaktionsgemisch mit einem Lösemittel weiter verdünnt, um die gewünschte, niedrigere Percarbonsäurekonzentration einzustellen. So können etwa für Toilettenreinigungszwecke Lösungen eingesetzt werden, die 0,5 bis 1 Gew.-% Peressigsäure enthalten. In der Regel wird zunächst die Percarbonsäure in konzentrierterer Lösung hergestellt, da anderenfalls die Gleichgewichtseinstellung einen zu langen Zeitraum in Anspruch nehmen würde.

Auch bei Verdünnung einer konzentrierten Gleichgewichtslösung der Percarbonsäure mit Wasser verändert sich der Gleichgewichtspunkt des Systems zugunsten der Regenierung der ursprünglichen Reaktanten, wobei auch diese Gleichgewichtseinstellung u. U. einen langen Zeitraum von mehreren Wochen oder Monaten in Anspruch nehmen kann. Entsprechend handelt es sich bei der verdünnten Percarbonsäurelösung um eine Lösung veränderlicher Zusammensetzung, die aufgrund der Abnahme der Percarbonsäurekonzentration mehr und mehr ihre Wirkung verliert. Hinzu kommt das Problem, dass die endgültige Zusammensetzung teilweise weitere Komponenten enthält, die die Stabilität der Percarbonsäure weiter herabsetzen. Entsprechend schlägt etwa die EP 0 677 990 B1 vor, das tatsächlich zu verwendende Desinfektionsmittel erst kurz vor Anwendung aus zwei Lösungen herzustellen, von denen die eine Peressigsäure und die zweite weitere Komponenten wie z. B. einen Korrosionsinhibitor, der die Stabilität der Peressigsäure herabsetzt, enthält. Nach dem Vermischen wird die Desinfektionslösung rasch eingesetzt, und zwar zu einem Zeitpunkt, zu dem sich das Gleichgewicht noch nicht wieder ausgebildet hat, d. h. die Percarbonsäurekonzentration noch nicht wieder signifikant abgenommen hat.

In der EP 1 371 643 A2 wird ein Verfahren zur Herstellung von Percarbonsäurelösungen beschrieben, bei dem zwei Reaktanten vor Einsatz der Lösung miteinander vermischt werden, um eine aktivierte Lösung zu erhalten. Der erste Reaktant enthält einen Acylgruppendonor, der zweite eine Peroxidionenquelle, z. B. Wasserstoffperoxid, d. h. erst bei der Vereinigung entsteht die Percarbonsäure. Tween kann im ersten Reaktanten enthalten sein und dient als Tensid.

Die Verdünnung der Percarbonsäurelösung erst kurz vor der Anwendung stellt grundsätzlich eine Möglichkeit dar, die Lebensdauer der Percarbonsäure zu erhöhen, ist jedoch mit dem Nachteil verbunden, dass ein vergleichsweise großer Aufwand betrieben werden muß. So muß gegebenenfalls der Verbraucher, der das Desinfektionsmittel etwa im Sanitärbereich einsetzen möchte, zunächst zwei Lösungen aus zwei verschiedenen Behältern in einem dritten Behälter miteinander vermischen, um die Lösung anschließend einsetzen zu können. Da es gerade im Sanitärbereich häufig erwünscht ist, die Lösung mit einer entsprechenden Spritzflasche auch in schlecht zugängliche Bereiche etwa der Toilette zu bringen, wäre zusätzlich eine Überführung der vermischten Lösung in eine Spritzflasche erforderlich, was die Handhabung vergleichsweise umständlich macht. Der Verbraucher ist vielmehr gewohnt, unmittelbar einsatzbereite Lösungen zu verwenden.

Ein weiteres Problem besteht darin, dass eine hochkonzentrierte Peressigsäurelösung, die erst noch herunter verdünnt werden muß, sehr vorsichtig gehandhabt werden muß, da bei Kontakt mit der Haut Verätzungen zu befürchten sind. Besonders problematisch ist selbstverständlich der Kontakt mit Schleimhäuten. Auch diese Tatsache macht die Verwendung einer Percarbonsäurelösung, die vor dem Einsatz erst noch verdünnt werden muß, zumindest für im Umgang mit Chemikalien unerfahrene Endverbraucher problematisch.

Ausgehend vom beschriebenen Stand der Technik stellt sich daher die Aufgabe, eine Zusammensetzung enthaltend mindestens eine Percarbonsäure zur Verfügung zu stellen, die eine ausreichende Stabilität besitzt, ohne dass auf das oben beschriebene Verfahren der vergleichsweise umständlichen Verdünnung kurz vor Einsatz zurückgegriffen werden müßte.

Die Aufgabe wird erfindungsgemäß gelöst durch eine Zusammensetzung nach Anspruch 1.

Der Erfindung liegt die Erkenntnis zugrunde, dass die Zugabe einer signifikanten Menge eines Sorbitanesters die Stabilität der Percarbonsäure erheblich erhöht. Erste Versuche haben gezeigt, dass sich die Percarbonsäurekonzentration über einen Zeitraum von mehreren Wochen praktisch nicht verändert, was eine Mindestverwendbarkeit der erfindungsgemäßen Zusammensetzung von zwei Jahren erwarten läßt. Der Effekt wird darauf zurückgeführt, dass der Sorbitanester die Percarbonsäure teilweise komplexiert und die Beweglichkeit des beim Zerfall der Percarbonsäure zunächst entstehenden atomaren Sauerstoffs soweit herabsetzt, dass die Wahrscheinlichkeit für eine Rückreaktion erheblich erhöht ist.

Bei den Sorbitanestern handelt es sich insbesondere um ethoxylierte Sorbitanester, sogenannte Polysorbate. Diese werden u.a. unter der Marke "Tween^{®}" durch die Firma ICI vertrieben. Insbesondere kann Polysorbat 20, 21, 40, 60, 61, 65, 80, 81 oder 85 (Tween 20, 21 etc.) verwendet werden. Es handelt sich dabei um Polyethoxysorbitanlaurate, -palmitate, -stearate, - tristearate, -oleate und -trioleoate. Zumeist stellen diese Polysorbate ölige Flüssigkeiten dar, die in Wasser gut löslich und dispergierbar sind. Grundsätzlich ist jedoch auch die Verwendung von nicht ethoxylierten Sorbitanestern, d. h. den Mono-, Di- oder Triestern der Sorbitane mit Fettsäuren möglich. Die Konzentration der Sorbitanester in der Zusammensetzung beträgt 1 bis 50 Gew.-%, insbesondere > 15 Gew.-%. Besonders bevorzugt ist eine Konzentration von 16 bis 30 Gew.-% und ganz besonders 18 bis 25 Gew.-%. Eine Übersicht über mögliche zu verwendende Polysorbate ist der nachfolgenden Tabelle zu entnehmen.

| | |
|---|---|
| Polysorbat 20 | Polyoxyethylen(20)-Sorbitanmonolaurat |
| Polysorbat 21 | Polyoxyethylen(4)-Sorbitanmonolaurat |
| Polysorbat 40 | Polyoxyethylen(20)-Sorbitanmonopalmitat |
| Polysorbat 60 | Polyoxyethylen(20)-Sorbitanmonostearat |
| Polysorbat 61 | Polyoxyethylen(4)-Sorbitanmonostearat |
| Polysorbat 65 | Polyoxyethylen(20)-Sorbitantristearat |
| Polysorbat 80 | Polyoxyethylen(20)-Sorbitanmonooleat |
| Polysorbat 81 | Polyoxyethylen(5)-Sorbitanmonooleat |
| Polysorbat 85 | Polyoxyethylen(20)-Sorbitantrioleat |

Als besonders günstig hat sich die Verwendung von Polysorbat 20 (Tween 20) herausgestellt.

Je nach Einsatzzweck kann die Percarbonsäurekonzentration in der Zusammensetzung zwischen 0,1 bis 45 Gew.-% betragen, besonders bevorzugt ist eine Konzentration zwischen 0,1 und 20 Gew.-% und insbesondere 5 bis 15 Gew.-%. Naturgemäß ist einerseits die Wirksamkeit der Zusammensetzung umso größer, desto höher die Percarbonsäurekonzentration ist, andererseits reichen für viele Einsatzzwecke bereits Konzentrationen im Bereich bis 1 Gew.-%. In der Regel wird zunächst ein Konzentrat hergestellt, das über eine Percarbonsäurekonzentration zwischen 10 und 20 Gew.-% verfügt, dessen Konzentration jedoch anschließend durch Verdünnung mit einem Lösemittel herabgesetzt wird. Im Gegensatz zum oben beschriebenen Stand der Technik kann jedoch die Verdünnung bereits lange vor Einsatz der Zusammensetzung erfolgen, da auch die verdünnte Zusammensetzung eine ausreichende Stabilität der Percarbonsäure aufweist.

Als besonders vorteilhaft hat es sich erwiesen, Zusammensetzungen zu wählen, die mindestens zwei Percarbonsäuren enthalten, da hierbei häufig synergistische Effekte beobachtet werden. So hat sich herausgestellt, dass unterschiedliche Percarbonsäuren für unterschiedliche Zwecke besonders geeignet sind. Beispielsweise werden eine Reihe von Toxinen, sowohl Mykotoxine als auch Endotoxine, die über eine Aldehyd- oder Ketofunktion verfügen, effektiv mittels Perbenzoesäure über eine Baeyer-Villiger-Oxidation zerstört. So ist Perbenzoesäure etwa sehr effektiv gegen Aflatoxine einsetzbar, welche von Schimmelpilzen gebildet werden und sowohl giftig als auch cancerogen sind. Darüber hinaus wirkt Perbenzoesäure als Katalasehemmer. Peressigsäure wiederum ist geeignet, die Porenproteine von Bakterien effektiv anzugreifen, während schließlich Perzitronensäure sich als für den Abbau von Biofilmen und Kalkverkrustungen in Biofilmen besonders geeignet erwiesen hat. Persorbinsäure kann besonders effektiv in Lipidschichten eindringen und auf diese Weise Zellmembranen durchdringen, um beispielsweise Bakterien zu deaktivieren.

Grundsätzlich gilt, dass gut lösliche Persäuren einen schnellen Eintritt der Wirkung hervorrufen (beispielsweise Perweinsäure, Peressigsäure oder Perzitronensäure), schwer lösliche Persäuren hingegen sind in ihrer Wirkung länger anhaltend (beispielsweise Persorbinsäure oder Perbenzoesäure). Perbernsteinsäure weist den Vorteil auf, dass es zusätzlich konservierend wirkt. Je nach Einsatzzweck können verschiedene Percarbonsäuren miteinander kombiniert werden, um die zu bekämpfenden Bakterien, Viren, Toxine etc. möglichst effektiv anzugreifen.

Besonders bevorzugt ist einzeln oder in Kombination mit einer anderen Percarbonsäure die Verwendung von Perbenzoesäure, Perzitronensäure, Peressigsäure, Persorbinsäure, Permalonsäure, Permaleinsäure, Perfumarsäure, Perweinsäure und/oder Perbernsteinsäure. Grundsätzlich ist allerdings die Verwendung nahezu beliebiger Percarbonsäuren mit Kohlenstoffketten beliebiger Länge möglich. Aufgrund der vergleichsweise schlechten Löslichkeit in Wasser von besonders langkettigen Carbonsäuren ist jedoch die Verwendung von Percarbonsäuren mit einer Kohlenstoffkette bis maximal C₈ bevorzugt.

Als besonders geeignete Kombinationen haben sich Zusammensetzungen herausgestellt, die sowohl Perbenzoesäure als auch Persorbinsäure und ggf. zusätzlich Perweinsäure oder Perbernsteinsäure enthalten. Für die Auflösung von Biofilmen sind Kombinationen aus Perzitronensäure und Perbenzoesäure geeignet.

Um die Rückreaktion der Percarbonsäure zur zugrundeliegenden Percarbonsäure weiter zu verlangsamen enthält die Zusammensetzung in der Regel ein anorganisches Peroxid, insbesondere Wasserstoffperoxid, welches geeignet ist, die Carbonsäure zur Percarbonsäure zu oxidieren. Auf diese Weise wird das Gleichgewicht in Richtung der Percarbonsäure verlagert. Daneben kann das in der Zusammensetzung enthaltene Wasserstoffperoxid auch noch selbst als Desinfektionsmittel zusätzlich zur Percarbonsäure wirken. Die Konzentrationen des anorganischen Peroxids beträgt vorzugsweise 20 bis 40, insbesondere 30 bis 40 Gew.-%.

Des Weiteren enthält die Zusammensetzung üblicherweise auch noch die zur Percarbonsäure korrespondierende, zugrundeliegende Carbonsäure. Zum einen ist die Carbonsäure in der Regel in der Zusammensetzung schon allein deshalb enthalten, weil sich ein Gleichgewicht zwischen Carbonsäure und Percarbonsäure ausbildet, zum anderen kann jedoch dieses Gleichgewicht noch zusätzlich auf die Seite der Percarbonsäure verlagert werden, indem der Zusammensetzung ein Überschuss an der Carbonsäure zugesetzt wird. Es bildet sich ein Gleichgewicht aus, wobei letztlich i. d. R. ca. 50 % der Carbonsäure in Form der Percarbonsäure vorliegt.

Die Zusammensetzung kann übliche Zusatzstoffe enthalten, insbesondere Lösemittel, Tenside, Sequestrierungsmittel, pH-Regulatoren, Korrosionsinhibitoren, Persäurestabilisatoren, Komplexbildner, Entschäumungsmittel, Farb- und/oder Duftstoffe. Der Zusatz von Tensiden ist insbesondere sinnvoll, wenn die Zusammensetzung gleichzeitig als Reinigungsmittel fungieren soll. Als Tensid geeignet ist beispielsweise SDS (Natriumdodecylsulfat). Korrosionsinhibitoren sind insbesondere dann sinnvoll, wenn die Zusammensetzung zur Behandlung von Metalloberflächen eingesetzt wird. Als Korrosionsinhibitor können Alkalimetallphosphate, bevorzugt Kaliumphosphate eingesetzt werden. Besonders bevorzugt ist der Einsatz von Dikaliumhydrogenorthophosphat (K₂HPO₄). Die Konzentration des Korrosionsinhibitors liegt vorzugsweise 0,1 und 5 Gew.-%.

Des Weiteren kann die Lösung einen Persäure-Stabilisator enthalten, vorzugsweise in einer Konzentration von 0,1 bis ca. 2 Gew.-%. Als PersäureStabilisatoren können Phosphonsäuren und ihre Salze oder auch Dipicolinsäure zum Einsatz kommen.

Auch der Einsatz einer geringen Menge Phosphorsäure ist möglich, wobei die Phosphorsäure insbesondere als saurer Katalysator zur Unterstützung einer Baeyer-Villiger-Oxidation dienen kann. Denkbar ist ferner der Einsatz ein oder mehrerer oxidationsbeständiger Permeationsmittel wie DMSO.

Als Lösemittel dient in erster Linie Wasser oder auch ein Alkohol, insbesondere Ethanol oder Isopropanol. Alkohole weisen den Vorteil auf, dass sie einen zusätzlichen bakteriziden und fungiziden Effekt aufweisen, wodurch die keimtötende Wirkung der erfindungsgemäßen Zusammensetzung verstärkt wird.

Die Zusammensetzung kann grundsätzlich als Lösung, Feststoff oder Gel formuliert werden, wobei bei Formulierung als Feststoff vor der Anwendung üblicherweise die Aufnahme in einem Lösemittel steht. Im Falle der Formulierung als Gel wird der als Lösung vorliegenden Zusammensetzung mindestens ein Geliermittel zugesetzt, vorzugsweise Aerosil, Alginat, Agarose oder mindestens eine Acrylat. Das resultierende Gel kann dann auf eine zu behandelnde Oberfläche aufgetragen werden.

Bei der Formulierung als Feststoff entfällt das Lösemittel und die weiteren Komponenten werden als pulverförmige Mischung, als Granulat oder in Tablettenform geliefert.

Der pH-Wert der Zusammensetzung sollte im sauren Bereich liegen, so dass die Percarbonsäuren als freie Säuren und nicht als Salze vorliegen, da sich die Percarbonsäure im alkalischen relativ schnell zersetzt. Typischerweise liegt der pH-Wert für ein zunächst hergestelltes Konzentrat der Zusammensetzung bei 0 bis 2, während der pH-Wert der für Anwendungszwecke verdünnten Lösung zwischen 3 und 6 beträgt. Gegebenenfalls kann der pH-Wert durch Einsatz von pH-Regulatoren, vorzugsweise durch Zusatz von Säuren, Basen und/oder Puffer eingestellt werden.

Neben der erfindungsgemäßen Zusammensetzung betrifft die Erfindung auch ein Verfahren zur Herstellung einer solchen Zusammensetzung. Gemäß dem erfindungsgemäßen Verfahren wird eine Carbonsäure oder ein Carbonsäurederivat mit einem anorganischen Peroxid, insbesondere Wasserstoffperoxid, in Gegenwart eines ethoxylierten, nicht ethoxylierten oder Oxypropyleneinheiten enthaltenden Sorbitanesters umgesetzt. Als Carbonsäurederivat können solche verwendet werden, die nach Umsetzung Percarbonsäuren ergeben, insbesondere Carbonsäureanhydride, -amide oder -ester.

Die Reaktion wird typischerweise bei einer Temperatur < 50°C durchgeführt, insbesondere zwischen 10 und 30°C. Bevorzugt ist die Durchführung der Reaktion bei Raumtemperatur, d.h. zwischen 20 und 25°C.

Bei der Reaktion kann der Sorbitanester unmittelbar als Lösemittel für die Carbonsäure / das Carbonsäurederivat dienen.

Durch die Abwesenheit von Wasser wird das Gleichgewicht der Reaktion der Carbonsäure mit Wasserstoffperoxid zur Percarbonsäure und Wasser auf die Produktseite verlagert. Dieser Effekt kann durch den Einsatz von Carbonsäureanhydriden anstelle der Carbonsäure selbst noch verstärkt werden, da diese zusätzlich der Reaktionsmischung Wasser entziehen. Die Percarbonsäure wird durch die Anwesenheit des Sorbitanesters / insbesondere des Polysorbats deutlich stabilisiert, so dass sich ein vergleichsweise hoher Anteil an Percarbonsäure in der Reaktionsmischung ausbildet. Diese Stabilisierung der Percarbonsäure ist auch dann noch zu beobachten, wenn schließlich nach Beendigung der Reaktion (d. h. nach Einstellung des Gleichgewichts) die Reaktionsmischung mit einem entsprechenden Lösemittel, üblicherweise Wasser oder Alkohol, verdünnt wird.

Die Umsetzung kann jedoch auch direkt in wässeriger Lösung stattfinden, wodurch gewährleistet wird, dass insgesamt eine homogene Zusammensetzung erzeugt wird. Um hierbei jedoch das Reaktionsgleichgewicht zunächst ausreichend auf die Percarbonsäureseite zu verlagern, ist es sinnvoll, diese Umsetzung zunächst vergleichsweise hochkonzentriert durchzuführen und anschließend eine Verdünnung mit dem Lösemittel, insbesondere Wasser, herbeizuführen.

Bei der Umsetzung wird der Sorbitanester bevorzugt in einer Konzentration von 16 bis 30 Gew.-%, insbesondere 18 bis 25 Gew.-%, eingesetzt. Das anorganische Peroxid, d. h. insbesondere Wasserstoffperoxid, wird zweckmäßigerweise in einer Konzentration von 20 bis 40 Gew.%, insbesondere 30 bis 40 Gew.-%, eingesetzt.

Die Umsetzung zur Percarbonsäure kann zusätzlich durch Zugabe eines sauren Katalysators beschleunigt werden. Hierbei kann es sich um (konzentrierte) Schwefelsäure, Phosphorsäure oder Methansulfonsäure handeln. Schwefelsäure weist dabei den Vorteil auf, dass es zusätzlich wasserentziehend wirkt. Grundsätzlich ist aber auch die Verwendung anderer starksaurer anorganischer Mineralsäuren möglich.

Die für die Umsetzung benötigte Zeit beträgt typischerweise zwischen einem Tag und sechs Wochen, da die Gleichgewichtseinstellung verhältnismäßig langsam erfolgt. Als besonders geeignet hat sich insbesondere ein Zeitraum von zwei bis vier Wochen herausgestellt.

Sinnvollerweise wird bei der Reaktion das anorganische Peroxid, d. h. i. d. R. Wasserstoffperoxid, im Überschuss gegenüber der Carbonsäure bzw. dem Carbonsäureanhydrid eingesetzt. Auf diese Weise wird zum einen das Gleichgewicht zur Produktseite hin verlagert, zum anderen wird dafür gesorgt, dass durch Zerfall entstandene Carbonsäure erneut zur Percarbonsäure hin oxidiert wird.

Die Verdünnung mit Lösemittel erfolgt typischerweise in einem Verhältnis von 1:2 bis 1:50, insbesondere im Verhältnis 1:5 bis 1:20.

Die erfindungsgemäße Zusammensetzung kann für eine ganze Reihe von Zwecken verwendet werden, die mit der Bekämpfung schädlicher Mikroorganismen und von ihnen produzierter Stoffwechselprodukte, Viren etc. zusammenhängen. So dient die Zusammensetzung insbesondere als Desinfektions-, Pflanzenschutz-, Pflanzenstärkungs- und Entkeimungsmittel sowie als Bakterizid, Fungizid, Insektizid oder Pestizid. Des Weiteren können die erfindungsgemäßen Zusammensetzungen zur Herstellung von Arzneimitteln zur Behandlung bakterieller oder viraler Infektionskrankheiten, Mykosen, Pedikulosen oder gegen sonstigen Parasitenbefall dienen.

Bei der Bekämpfung von Bakterien, Keimen, Pilzen etc. bewirkt die Freisetzung von Sauerstoffradikalen eine schnelle Oxidation der Außenhülle/Zellmembran von Zellen, wobei die Außenhülle aufreißt und zerstört wird, so dass das Zellinnere nach außen tritt. Auch Enzyme und andere Proteine sowie Nukleinsäuren werden durch die Percarbonsäuren angegriffen und entsprechend geschädigt. Durch die daraus folgende Blockierung der Stoffwechselwege (Energiestoffwechsel, Proteinbiosynthese) tritt rasch der Zelltod ein. Daneben werden durch die erfindungsgemäße Zusammensetzung auch Biotoxine wie z. B. Aflatoxine oder Endotoxine, Mykotoxine und Allergene zerstört.

Die Percarbonsäuren der erfindungsgemäßen Zusammensetzungen sind in der Lage, die Tertiärstruktur von Proteinen so zu verändern, dass diese ihre Eigenschaften verlieren. Beispielsweise können Disulfidbrücken durch Oxidation aufgebrochen werden. Auch Thiolgruppen können zu Sulfonsäuren oxidiert werden.

Die erfindungsgemäßen Zusammensetzungen sind auch in der Lage, die Stoffwechselzentren von Mikroorganismen durch Oxidation der Enzyme, welche meist Schwermetalle wie z. B. Kupfer enthalten, zu deaktivieren. Ebenso sind die Zusammensetzungen in der Lage, DNA bzw. RNA von Bakterien, Pilzen, ihre Sporen und Viren durch Oxidation der Nukleotide so zu schädigen, dass die Erbinformation verloren geht.

Viren können dadurch deaktiviert werden, dass die Capsidproteine und Envelopeproteine oxidiert werden. Dies führt zu einer Desintegration des Nukleocapsids oder zu einer Veränderung der Capsidoberfläche, die die Aktivität des Virus zerstört. Daneben kann, wie oben bereits erwähnt, die Erbinformation des Virus ebenfalls beeinträchtigt werden.

Bei der Oxidation und der damit verbundenen Zerstörung von schädlichen Mikroorganismen wandelt sich die Percarbonsäure wieder zur Carbonsäure selbst um, so dass letztlich nur vergleichsweise harmlose Folgeprodukte entstehen. Die Verwendung von Perbenzoesäure beispielsweise hat dabei den zusätzlichen Effekt, dass die entstehende Benzoesäure als Konservierungsmittel dient, was insbesondere bei der Entkeimungsbehandlung von Nahrungsmitteln hilfreich sein kann.

Die erfindungsgemäße Zusammensetzung wurde für folgende Anwendungsbereiche erprobt und für wirksam befunden:
Pflanzenschutz/-stärkung:
   - Stärkung von Bäumen gegen Phytophtora ramorum und Borkenkäfer durch Besprühen;
   - Stärkung von Tabakpflanzen gegen den Tabak-Mosaik-Virus, gegen Blattläuse und gegen die Wurzel- und Stängelfäule durch Besprühen;
   - Stärkung von Kartoffelpflanzen gegen Kraut- und Knollenfäule (Phytophthora infestans) und Kartoffelkäfer (Leptinotarsa decemlineata) durch Besprühen;
   - Stärkung von Gurkenpflanzen gegen den falschen Mehltau, gegen Blattläuse, Spinnenmilben und Thripse durch Besprühen;
   - Stärkung der Widerstandskraft von Kohlpflanzen gegen Thripse, Bakterienblattfleckenkrankheit, Adernschwärze, Kohlschwärze, Ringfleckenkrankheit, gegen Insekten, Milben und Nematoden durch Besprühen;
   - Stärkung der Weinrebe unter anderem gegen den Falschen und Echten Mehltau (Plasmopara viticola und Oidium tuckeri), Anthraknose, Botrytis, Esca, Eutypiose, Grünfäule, Rosafäule, Roten Brenner, Schwarzfäule, Schwarzfleckenkrankheit, Weißfäule, Welke, Blattroll-Krankheit, Essigfäule, Panachure, Reisessigkrankheit, Phytoplasmen, Pierce Disease, Rebschildläuse, Rebläuse oder Traubenwickler durch Besprühen. Insbesondere in diesem Bereich kann die Anwendung von Kupfer- und Schwefelpräparaten im ökologischen Weinbau oder von Fungiziden im herkömmlichen Weinbau durch Anwendung dieses Mittels entfallen oder zumindest reduziert werden. Gerade bei der Bekämpfung der Schwarzfäule (Black Rot, *Guignardia bidwellii),* einem Pilz, der seit einigen Jahren Weinanbaugebiete an der Mosel, der Nahe oder am Mittelrhein befallen hat, hat sich die erfindungsgemäße Zusammensetzung als sehr wirkungsvoll erwiesen.

Im Rahmen der Weinherstellung kann die erfindungsgemäße Zusammensetzung auch gut zur Desinfektion von Weinfässern verwendet werden und dabei Schwefelpräparate, insbesondere SO₂, ersetzen.

Insbesondere lassen sich die erfindungsgemäßen Zusammensetzungen zur Bekämpfung von Brettanomyces (Brettanomyces bruxellensis) einsetzen. Hierbei handelt es sich um einen Hefestamm, der in Weinfässern häufig vorkommt und dafür sorgt, dass Weinfässer unnötigerweise frühzeitig entsorgt werden müssen. Ein besonderes Problem stellt Brettanomyces bei Rotweinen dar. Die Stoffwechselprodukte (flüchtige Phenole) bewirken ein Verderben des Geruchs und Geschmacks des Weines ("Pferdeschweiß").

### Landwirtschaft:

- Hilfe bei der Reinigung von Ställen durch Zerstäubung. Hier werden Bakterien und Pilze, z. B. Schimmelpilze, erfolgreich bekämpft, darüber hinaus wirkt die erfindungsgemäße Zusammensetzung desodorierend, indem sie geruchsbildende Keime abtötet.
- Hilfe bei der Fell- und Federpflege von Tieren durch Besprühen. Es kann gegen Pilze (z. B. Haut- oder Schimmelpilze), gegen Bakterien, Viren und Algen eingesetzt werden. Es wirkt bei der Fell- und Federpflege, gegen Milben und Hautpilze und bei der Reinigung und Desinfektion kleiner Wunden. Darüber hinaus wirkt die erfindungsgemäße Zusammensetzung desodorierend, indem es geruchsbildende Keime abtötet.
- Hilfe bei der Huf- und Klauenpflege von Tieren durch Auftragen einer Lösung. Es wirkt gegen Mauke und andere Krankheiten, welche die Hufe und Klauen von Tieren befallen.
- Hilfe bei der Pflege von Bienen gegen Milben, Pilze und Bakterien, welche die Biene und den Bienenstock befallen. Die erfindungsgemäße Zusammensetzung wird im Bienenstock zerstäubt.

Die erfindungsgemäße Zusammensetzung ist ferner für die Lederpflege, zur Reinigung und Desinfektion von Rohrleitungen und Schläuchen, insbesondere auch bei medizinischen Geräten und Apparaten, zur Reinigung und Desinfektion von Wassertanks, zur Luft- und Wasserentkeimung, als Oberflächendesinfektionsmittel und zur Schwimmbad- und Whirlpoolentkeimung geeignet.

Die Zusammensetzung kann auch zur Herstellung von Arzneimitteln verwendet werden, beispielsweise für Mittel, die der Reinigung und Desinfektion von Wunden dienen. Des Weiteren ist die erfindungsgemäße Zusammensetzung u. a. gegen SARS-Coronavirus, Bacillus anthracis, Escherichia coli, Klebsiella pneumoniae, Staphylococcus aureus, Pseudomonas aeruginosa, Streptococcus faecalis, Proteus mirabilis, Mycobacterium tuberculosis, Clostridium sporogenes, Candida albicans, Hausstaubmilben, Varroamilben und viele andere Erreger und Parasiten wirksam. Daneben kann es bei Fuß- und Nagelpilz oder gegen Warzen, als Mund-, Zahn- oder Hautpflegemittel eingesetzt werden. Es kann bspw. inhaliert oder auf befallene Stellen aufgetragen werden.

Die erfindungsgemäße Zusammensetzung kann als Entkeimungsmittel zur Behandlung von Lebensmitteln, insbesondere Obst und Gemüse eingesetzt werden. Hierbei wirkt sie gegen Pilze, insbesondere Schimmelpilze, Bakterien, Viren, Algen sowie Eier von Fruchtfliegen und anderen Insekten. Je nach Bedarf können die Lebensmittel mit der erfindungsgemäßen Zusammensetzung besprüht oder gewaschen werden. Früchte und Gemüse können auch kurzzeitig in die erfindungsgemäße Zusammensetzung eingetaucht werden. Besonders vorteilhaft ist die Tatsache, dass das Entkeimungsmittel für Menschen und Tiere letztlich unbedenklich und vollständig abbaubar ist, da diese über geeignete Enzyme zur Zersetzung der Percarbonsäuren verfügen und die resultierende Carbonsäure selbst schließlich praktisch ungefährlich ist. Ebenso verhält es sich mit der Verwendung als Pflanzenschutz- oder Pflanzenstärkungsmittel, da die Zusammensetzung zwar Pflanzenschädlinge effektiv bekämpft, die Pflanze selbst jedoch nicht schädigt. Besonders gut läßt sich die Erfindung im Bereich des Weinbaus, etwa zur Behandlung der Weinreben oder auch zur nachträglichen Behandlung der geernteten Weintrauben einsetzen.

In geringer Konzentration kann die erfindungsgemäße Zusammensetzung auch zur Entkeimung der Raumluft beitragen, um auf diese Weise in der Luft befindliche Schimmelpilze, Bakterien, Viren und Sporen zu bekämpfen. Die entsprechende Lösung kann dabei in Luftbefeuchtern oder Sprühanlagen verwendet werden, die einen Wirkstoffnebel erzeugen, der die Räume rasch und sicher von Keimen befreit. Daneben bewirkt die Verteilung des Wirkstoffes in der Raumluft auch die Bekämpfung unangenehmer Gerüche, beispielsweise von Urin oder Tabak. Die Reinigung der Raumluft spielt insbesondere in solchen Bereichen eine Rolle, an denen viele Menschen zusammen kommen, so dass sich Krankheiten unter Umständen schnell ausbreiten können. Beispiele hierfür stellen Krankenhäuser, Kaufhäuser, Flughäfen, Bahnhöfe und andere öffentliche Gebäude und Verkehrsmittel dar. Sinnvoll ist der Einsatz insbesondere dort, wo Klimaanlagen oder Raumbedufter verwendet werden, da diese durch den hohen Umsatz an Luft für eine rasche Verteilung von in die Luft eingebrachten Keimen sorgen. Die Entkeimung kann in der Weise erfolgen, dass die erfindungsgemäße Zusammensetzung stetig beigemischt wird, oder aber dadurch, dass die Anlage hin und wieder kurzfristig still gelegt wird, um sie mit Hilfe der erfindungsgemäßen Zusammensetzung zu entkeimen. Insbesondere bei der Verwendung in Raumbeduftern ist die zuletzt genannte Variante bevorzugt, da auch die verwendeten Duftstoffe von den Percarbonsäuren oxidiert werden können.

Die erfindungsgemäße Zusammensetzung kann als Desinfektionsmittel zur Behandlung von Oberflächen dienen. Dies kann zum einen im medizinischen Bereich geschehen, wo eine Vielzahl von Geräten mit Krankheitserregern in Berührung kommen, bspw. Endoskope oder Operationsbesteck. Zum anderen ist auch die Verwendung im industriellen Bereich möglich, wo die erfindungsgemäße Zusammensetzung etwa in Rohrleitungen zum Einsatz kommen kann, um diese zu desinfizieren. Besondere Bedeutung hat dies im Bereich der Lebensmittel- und Getränkeindustrieindustrie, z. B. in Brauereien, Mostereien, Wein- und Sektkellereien, bei Obstsaft-, Limonaden- oder Mineralwasserherstellern.

Im Haushalt kann das Mittel in erster Linie als Desinfektionsmittel eingesetzt werden, vorzugsweise im Sanitär- und Küchenbereich. Darüber hinaus ist es zur Entkeimung von Wasser und Wasserbehältern gut geeignet, beispielsweise von Wassertanks in Campingfahrzeugen oder Booten. Ebenso kann es zur Entkeimung von Schwimmbädern oder Whirlpools eingesetzt werden, bei denen die bisher übliche Verwendung von Chlor zur Entkeimung mit nicht unerheblichen Nebenwirkungen verbunden ist.

Die erfindungsgemäße Zusammensetzung kann auch zur Hautdesinfektion dienen, was insbesondere im medizinischen Bereich für Ärzte beim Waschen ihrer Hände sinnvoll ist.

Daneben betrifft die Erfindung auch die Verwendung einer ethoxylierten, nicht ethoxylierten oder Oxypropyleneinheiten enthaltenden Sorbitanesters zur Stabilisierung einer mindestens eine Percarbonsäure enthaltenden Zusammensetzung.

### Bespiel

1) In einer Lösung von Benzoesäure und Essigsäure in Polysorbat 20 wird ein Überschuss von Wasserstoffperoxid zusammen mit Methansulfonsäure eingebracht. Bezogen auf die Gesamtzusammensetzung beträgt der Gehalt zu Beginn der Reaktion 20 Gew.-% Polysorbat 20, 25 Gew.-% Benzoesäure, 5 Gew.-% Essigsäure, 38 Gew.-% Wasserstoffperoxid sowie 2 Gew.-% Methansulfonsäure, Rest Wasser. Die Reaktionsmischung wird für ca. drei Wochen intensiv durchmischt, bis sich ein Gleichgewicht eingestellt hat. Schließlich wird die Lösung mit Wasser auf das 10fache Volumen verdünnt.
   Das Produkt kann als Schimmelpilz-Entferner eingesetzt werden, um Schimmelpilze und Schimmelpilzsporen einfach und sicher zu entfernen. Gleichzeitig werden auch Mykotoxine deaktiviert.
2) Eine andere Zusammensetzng (vor Umsetzung) setzt sich zusammen aus
   150 g Sorbinsäure
   250 g Benzoesäure
   100 ml Polysorbat 20 (Tween 20)
   1 ml H₂SO₄ (konz)
   4 ml H₃PO₄ (konz)
   mit H₂O₂ (35 Gew.-%) auffüllen und bei Raumtemperatur suspendieren und rühren. Nach ca. zwei Wochen hat sich das Gleichgewicht ausgebildet.

## Patentansprüche

1. Zusammensetzung enthaltend mindestens eine Percarbonsäure, wobei die Zusammensetzung als wässrige und/oder alkoholische Lösung mit einem pH-Wert von 0 bis 6 vorliegt und wobei die Percarbonsäurekonzentration 0,1 bis 45 Gew.-% beträgt, **dadurch gekennzeichnet, dass** die Zusammensetzung mindestens einen ethoxylierten, nicht ethoxylierten oder Oxypropyleneinheiten aufweisenden Sorbitanester in einer Konzentration zwischen 1 und 50 Gew.-% enthält.

2. Zusammensetzung nach Anspruch 1, **dadurch gekennzeichnet, dass** der Sorbitanester ein Polysorbat ist.

3. Zusammensetzung nach Anspruch 2, **dadurch gekennzeichnet, dass** das Polysorbat Polyoxyethylen(20)-Sorbitanmonolaurat, Polyoxyethylen(4)-Sorbitanmonolaurat, Polyoxyethylen(20)-Sorbitanmonopalmitat, Polyoxyethylen(20)-Sorbitanmonostearat, Polyoxyethylen(4)-Sorbitanmonostearat, Polyoxyethylen(20)-Sorbitantristearat, Polyoxyethylen(20)-Sorbitanmonooleat, Polyoxyethylen(5)-Sorbitanmonooleat oder Polyoxyethylen(20)-Sorbitantrioleat ist.

4. Zusammensetzung nach einem der Ansprüche 1 bis 3, **dadurch gekennzeichnet, dass** die Konzentration des Sorbitanesters 16 bis 30 Gew.-%, insbesondere 18 bis 25 Gew.-%, beträgt.

5. Zusammensetzung nach einem der Ansprüche 1 bis 4, **dadurch gekennzeichnet, dass** die Percarbonsäurekonzentration 0,1 bis 20 Gew.-% beträgt.

6. Zusammensetzung nach Anspruch 5, **dadurch gekennzeichnet, dass** die Percarbonsäurekonzentration 5 bis 15 Gew.-% beträgt.

7. Zusammensetzung nach einem der Ansprüche 1 bis 6, **dadurch gekennzeichnet, dass** die Zusammensetzung mindestens zwei Percarbonsäuren enthält.

8. Zusammensetzung nach einem der Ansprüche 1 bis 7, **dadurch gekennzeichnet, dass** die Zusammensetzung Perbenzoesäure, Percitronensäure, Peressigsäure, Persorbinsäure, Permalonsäure, Permaleinsäure, Perfumarsäure, Perweinsäure und/oder Perbernsteinsäure enthält.

9. Zusammensetzung nach Anspruch 7 oder 8, **dadurch gekennzeichnet, dass** die Zusammensetzung Perbenzoesäure und Persorbinsäure enthält.

10. Zusammensetzung nach einem der Ansprüche 1 bis 9, **dadurch gekennzeichnet, dass** die Zusammensetzung ein anorganisches Peroxid, insbesondere Wasserstoffperoxid enthält.

11. Zusammensetzung nach einem der Ansprüche 1 bis 10, **dadurch gekennzeichnet, dass** die Zusammensetzung die zur Percarbonsäure korrespondierende Carbonsäure enthält.

12. Zusammensetzung nach einem der Ansprüche 1 bis 11, **dadurch gekennzeichnet, dass** die Zusammensetzung Lösemittel, Tenside, Sequestrierungsmittel, pH-Regulatoren, Korrosionsinhibitoren, Persäurestabilisatoren, Komplexbildner, Entschäumungsmittel, Farbstoffe und/oder Duftstoffe enthält.

13. Verfahren zur Herstellung einer Zusammensetzung nach einem der Ansprüche 1 bis 12, **dadurch gekennzeichnet, dass** eine Carbonsäure oder ein Carbonsäurederivat mit einem anorganischen Peroxid, insbesondere Wasserstoffperoxid, in Gegenwart eines ethoxylierten, nicht ethoxylierten oder Oxypropyleneinheiten aufweisenden Sorbitanesters umgesetzt wird.

14. Verfahren nach Anspruch 13, **dadurch gekennzeichnet, dass** die Umsetzung in wässeriger Lösung erfolgt.

15. Verfahren nach Anspruch 13 oder 14, **dadurch gekennzeichnet, dass** die Zusammensetzung nach Beendigung der Umsetzung mit einem Lösemittel, insbesondere Wasser, verdünnt wird.

16. Verfahren nach einem der Ansprüche 13 bis 15, **dadurch gekennzeichnet, dass** der Sorbitanester in einer Konzentration von 16 bis 30 Gew.-%, insbesondere 18 bis 25 Gew.-%, eingesetzt wird.

17. Verfahren nach einem der Ansprüche 13 bis 16, **dadurch gekennzeichnet, dass** das anorganische Peroxid in einer Konzentration von 20 bis 40 Gew.-%, insbesondere 30 bis 40 Gew.-% eingesetzt wird.

18. Verfahren nach einem der Ansprüche 13 bis 17, **dadurch gekennzeichnet, dass** die Umsetzung in Gegenwart eines sauren Katalysators, insbesondere Phosphorsäure, Schwefelsäure oder Methansulfonsäure erfolgt.

19. Verfahren nach einem der Ansprüche 13 bis 18, **dadurch gekennzeichnet, dass** die Umsetzung über einen Zeitraum von einem Tag bis sechs Wochen, insbesondere zwei bis vier Wochen erfolgt.

20. Verfahren nach nach einem der Ansprüche 13 bis 19, **dadurch gekennzeichnet, dass** das anorganische Peroxid im Überschuss gegenüber der Carbonsäure/dem Carbonsäurederivat eingesetzt wird.

21. Verwendung einer Zusammensetzung nach einem der Ansprüche 1 bis 12 als Desinfektionsmittel, Pflanzenschutzmittel, Pflanzenstärkungsmittel, Entkeimungsmittel, Bakterizid, Fungizid, Insektizid und/oder Pestizid.

22. Verwendung einer Zusammensetzung nach einem der Ansprüche 1 bis 12 zur Herstellung von Arzneimitteln zur Behandlung von bakteriellen oder viralen Infektionskrankheiten, Mykosen, Pedikulosen oder sonstigen Parasitenbefall.

23. Verwendung einer Zusammensetzung nach einem der Ansprüche 1 bis 12 zur Behandlung von Weinfässern.

24. Verwendung eines ethoxylierten, nicht ethoxylierten oder Oxypropyleneinheiten enthaltenden Sorbitanesters zur Stabilisierung einer mindestens eine Percarbonsäure enthaltenden wässrigen und/oder alkoholischen Zusammensetzung.

## Claims

1. Composition containing at least one percarboxylic acid, wherein the composition is an aqueous and/or alcoholic solution with a pH value between 0 and 6, wherein the concentration of percarboxylic acid ranges between 0.1 and 45 % w/w **characterized in that,** the composition comprises at least one sorbitan ester that is ethoxylated, non-ethoxylated or comprises oxypropylene units, wherein the concentration of sorbitan ester ranges between 1 and 50 % w/w.

2. Composition according to claim 1, **characterized in that** the sorbitan ester is a polysorbate.

3. Composition according to claim 2, **characterized in that** the polysorbate is polyoxyethylene (20) sorbitan monolaurate, polyoxyethylene (4) sorbitan monolaurate, polyoxyethylene (20) sorbitan monopalmitate, polyoxyethylene (20) sorbitan monostearate, polyoxyethylene (4) sorbitan monostearate, polyoxyethylene (20) sorbitan tristearate, polyoxyethylene (20) sorbitan monooleate, polyoxyethylene (5) sorbitan monooleate, polyoxyethylene (20) sorbitan trioleate.

4. Composition according to any of claims 1 to 3, **characterized in that** the concentration of sorbitan ester ranges between 16 and 30 % w/w, particularly between 18 and 25 % w/w.

5. Composition according to any of claims 1 to 4, **characterized in that** the concentration of percarboxylic acid ranges between 0.1 and 20 % w/w.

6. Composition according to claim 5, **characterized in that** the concentration of percarboxylic acid ranges between 5 and 15 % w/w.

7. Composition according to any of claims 1 to 6, **characterized in that** the composition contains at least two percarboxylic acids.

8. Composition according to any of claims 1 to 7, **characterized in that** the composition contains perbenzoic acid, percitric acid, peracetic acid, persorbic acid, permalonic acid, permaleic acid, perfumaric acid, pertartaric acid and/or persuccinic acid.

9. Composition according to claim 7 or 8, **characterized in that** the composition contains perbenzoic acid and persorbic acid.

10. Composition according to any of claims 1 to 9, **characterized in that** the composition contains an inorganic peroxide, in particular hydrogen peroxide.

11. Composition according to any claims 1 to 10, **characterized in that** the composition contains the carboxylic acid corresponding to the percarboxylic acid.

12. Composition according to any of claims 1 to 11, **characterized in that** the composition contains solvents, surfactants, sequestrants, pH regulators, corrosion inhibitors, peracid stabilizers, complexing agents, defoaming agents, coloring substances and/or scents.

13. Method for producing a composition according to any of claims 1 to 12,
**characterized in that,** a carboxylic acid or a carboxylic acid derivative is converted with an inorganic peroxide, in particular hydrogen peroxide, in the presence of a sorbitan ester that is ethoxylated, non-ethoxylated or comprises oxypropylene units.

14. Method according to claim 13, **characterized in that** the conversion takes place in an aqueous solution.

15. Method according to claim 13 or 14, **characterized in that**, when the conversion has been completed, the composition is diluted by means of a solvent, in particular water.

16. Method according to any of claims 13 to 15, **characterized in that** the sorbitan ester is used at a concentration ranging between 16 and 30 % w/w, especially between 18 and 25 % w/w.

17. Method according to any of claims 13 to 16, **characterized in that** the inorganic peroxide is used at a concentration ranging between 20 and 40 % w/w, especially between 30 and 40 % w/w.

18. Method according to any of claims 13 to 17, **characterized in that** the conversion is effected in the presence of an acidic catalyst, in particular phosphoric acid, sulfuric acid or methanesulfonic acid.

19. Method according to any of claims 13 to 18, **characterized in that** the conversion takes place during a period of between one day and six weeks, in particular between two and four weeks.

20. Method according to any of claims 13 to 19, **characterized in that** compared to the carboxylic acid/carboxylic acid derivative an excess of inorganic peroxide is used.

21. Use of a composition according to any of claims 1 to 12 to serve as disinfectant, plant/crop protection agent, plant/crop fortification agent, germicidal agent, bactericide, fungicide, insecticide and/or pesticide.

22. Use of a composition according to any of claims 1 to 12 for the production of drugs aimed at treating bacterial or viral infectious diseases, mycoses, pediculoses or counteract other parasitic infestation.

23. Use of a composition according to any of claims 1 to 12 for the treatment of wine barrels.

24. Use of a sorbitan ester that is ethoxylated, non-ethoxylated or comprises oxypropylene units for the purpose of stabilizing an aqueous and/or alcoholic composition containing at least one percarboxylic acid.

## Revendications

1. Composition contenant au moins un acide percarboxylique, la composition se présentant comme une solution aqueuse et/ou alcoolique avec un pH compris entre 0 et 6 et la concentration de l'acide percarboxylique étant de 0,1 à 45 % en poids, **caractérisée en ce que** la composition contient au moins un ester de sorbitane éthoxylé, non éthoxylé ou présentant des unités oxypropylène en une concentration comprise entre 1 et 50 % en poids.

2. Composition selon la revendication 1, **caractérisée en ce que** l'ester de sorbitane est un polysorbate.

3. Composition selon la revendication 2, **caractérisée en ce que** le polysorbate est du polyoxyéthylène(20)-sorbitane monolaurate, du polyoxyéthylène(4)-sorbitane monolaurate, du polyoxyéthylène(20)-sorbitane monopalmitate, du polyoxyéthylène(20)-sorbitane monostéarate, du polyoxyéthylène(4)-sorbitane monostéarate, du polyoxyéthylène(20)-sorbitane tristéarate, du polyoxyéthylène(20)-sorbitane monooléate, du polyoxyéthylène(5)-sorbitane monooléate ou du polyoxyéthylène(20)-sorbitane trioléate.

4. Composition selon l'une quelconque des revendications 1 à 3, **caractérisée en ce que** la concentration de l'ester de sorbitane est de 16 à 30 % en poids, en particulier de 18 à 25 % en poids.

5. Composition selon l'une quelconque des revendications 1 à 4, **caractérisée en ce que** la concentration en acide percarboxylique est de 0,1 à 20 % en poids.

6. Composition selon la revendication 5, **caractérisée en ce que** la concentration en acide percarboxylique est de 5 à 15 % en poids.

7. Composition selon l'une quelconque des revendications 1 à 6, **caractérisée en ce que** la composition contient au moins deux acides percarboxyliques.

8. Composition selon l'une quelconque des revendications 1 à 7, **caractérisée en ce que** la composition contient de l'acide perbenzoïque, de l'acide percitrique, de l'acide peracétique, de l'acide persorbique, de l'acide permalonique, de l'acide permaléique, de l'acide perfumarique, de l'acide pertartrique et/ou de l'acide persuccinique.

9. Composition selon la revendication 7 ou 8, **caractérisée en ce que** la composition contient de l'acide perbenzoïque et de l'acide persorbique.

10. Composition selon l'une quelconque des revendications 1 à 9, **caractérisée en ce que** la composition contient un peroxyde inorganique, en particulier du peroxyde d'hydrogène.

11. Composition selon l'une quelconque des revendications 1 à 10, **caractérisée en ce que** la composition contient l'acide carboxylique correspondant à l'acide percarboxylique.

12. Composition selon l'une quelconque des revendications 1 à 11, **caractérisée en ce que** la composition contient des solvants, des tensioactifs, des agent de séquestration, des régulateurs de pH, des inhibiteurs de corrosion, des stabilisateurs de peroxydes, des complexants, des antimousses, des colorants et/ou des matières odoriférantes.

13. Procédé de préparation d'une composition selon l'une quelconque des revendications 1 à 12, **caractérisé en ce qu'**un acide carboxylique ou un dérivé d'acide carboxylique est mis en réaction avec un peroxyde organique, en particulier du peroxyde d'hydrogène, en présence d'un ester de sorbitane éthoxylé, non éthoxylé ou présentant des unités oxypropylène.

14. Procédé selon la revendication 13, **caractérisé en ce que** la réaction s'effectue en solution aqueuse.

15. Procédé selon la revendication 13 ou 14, **caractérisé en ce que** la composition est diluée après la fin de la réaction avec un solvant, en particulier de l'eau.

16. Procédé selon l'une quelconque des revendications 13 à 15, **caractérisé en ce que** l'ester de sorbitane est utilisé en une concentration de 16 à 30 % en poids, en particulier de 18 à 25 % en poids.

17. Procédé selon l'une quelconque des revendications 13 à 16, **caractérisé en ce que** le peroxyde inorganique est utilisé en une concentration de 20 à 40 % en poids, en particulier de 30 à 40 % en poids,

18. Procédé selon l'une quelconque des revendications 13 à 17, **caractérisé en ce que** la réaction s'effectue en présence d'un catalyseur acide, en particulier de l'acide phosphorique, de l'acide sulfurique ou de l'acide méthane sulfonique.

19. Procédé selon l'une quelconque des revendications 13 à 18, **caractérisé en ce que** la réaction s'effectue sur une période d'un jour à six semaines, en particulier de deux à quatre semaines.

20. Procédé selon l'une quelconque des revendications 13 à 19, **caractérisé en ce que** le peroxyde inorganique est utilisé en excès par rapport à l'acide carboxylique / au dérivé d'acide carboxylique.

21. Utilisation d'une composition selon l'une quelconque des revendications 1 à 12 comme désinfectant, produit phytosanitaire, fortifiant de plantes, stérilisant, bactéricide, fongicide, insecticide et/ou pesticide.

22. Utilisation d'une composition selon l'une quelconque des revendications 1 à 12 à la préparation de produits pharmaceutiques pour le traitement des maladies infectieuses bactériennes ou virales, des mycoses, des pédiculoses ou d'autres infestations de parasites.

23. Utilisation d'une composition selon l'une quelconque des revendications 1 à 12 au traitement de tonneaux à vin.

24. Utilisation d'un ester de sorbitane éthoxylé, non éthoxylé ou présentant des unités oxypropylène à la stabilisation d'une composition aqueuse et/ou alcoolique contenant au moins un acide percarboxylique.
